# EUROPÄISCHE PATENTSCHRIFT

(11) **EP 0 384 132 B1**
(45) Veröffentlichungstag und Bekanntmachung des Hinweises auf die Patenterteilung: **07.01.1993**
(21) Anmeldenummer: 90101258.3
(22) Anmeldetag: 23.01.1990
(51) Int. Cl.: A01C 17/00

(54) **Schleuderstreuer**
Broadcaster
Epandeur centrifuge

(30) Priorität: 24.01.1989 DE 3901996
(43) Veröffentlichungstag der Anmeldung: 29.08.1990
(73) Patentinhaber: Rauch Landmaschinenfabrik GmbH, D-76545 Sinzheim (DE)
(72) Erfinder: Rauch, Norbert, D-7573 Sinzheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 3 812 087
- FR-A- 2 211 839
- GB-A- 1 045 370

## Beschreibung

Die Erfindung betrifft einen Schleuderstreuer für rieselfähiges Streugut, insbesondere Dünger, bestehend aus einem Vorratsbehälter mit wenigstens einem einstellbaren Auslauf, aus dem das Streugut im Fallstrom strahlartig austritt, und einer darunter um eine versetzt zum Auslauf angeordnete Achse umlaufenden Schleuderscheibe mit wenigstens einem Wurfflügel, der sich über die gesamte radiale Ausdehnung des Streugutstrahls zum Umfang der Schleuderscheibe erstreckt (DE-A1-3812 087).

Wie bei Streugeräten aller Art ist man auch bei Schleuderstreuern darauf bedacht, eine über die Streubreite möglichst gleichmäßige Verteilung des Streugutes, das heißt eine über die Streubreite gleichbleibende Streudichte zu erzielen. Dieses Ziel wird am ehesten bei relativ kleinen Streumengen und/oder kleinen Streubreiten erreicht. Das Streubild zeigt dann einen flach-dreieckförmigen Verlauf, dessen Maximum (Spitze) in der Mitte hinter dem Streuer liegt und das nach beiden Seiten flach abfällt. Die eigentliche Arbeitsbreite des Streuers ist diejenige Breite, bei der 50 % der gewünschten Streumenge ausgebracht worden sind. Durch entsprechendes Anschlußfahren kann dann eine Überlappung der Streubilder derart erzielt werden, daß sich die Streumengen jeder Fahrt so addieren, daß über die gesamte bestreute Fläche eine annähernd gleichmäßige Streudichte erhalten wird. Je größer die Streumenge ist, die im übrigen auch mit der Streubreite zunimmt, um so steiler fällt das Streubild zur Seite hin ab und um so schwieriger ist es, im Wege des Anschlußfahrens eine solche Überlappung der Streubilder zu erreichen, die zu einer gleichmäßigen Streudichte führt. Auch kommt es zu einer Vergrößerung der effektiven Arbeitsbreite. Ferner werden im mittleren Bereich Überdüngungen festgestellt, was in erster Linie auf die sogenannten Prallverluste zurückzuführen ist. Hierbei handelt es sich um diejenigen Streugutpartikel, die nicht kontrolliert von den Wurfflügeln erfaßt werden, sondern beim Eintreten des Wurfflügels in den Düngerstrahl durch Prallvorgänge in beliebige Richtungen beschleunigt bzw. abgelenkt werden.

Bei noch größeren Streumengen/Streubreiten zeigt das Streubild neben einer starken Überhöhung im mittleren Bereich hinter dem Schleuderstreuer, die vornehmlich auf die vorgenannten Prallverluste zurückzuführen ist, auf jeder Seite nochmals eine Überhöhung. Insgesamt ergibt sich also ein wellenförmiger Verlauf des Streubildes mit nach außen hin relativ steil abfallenden Flanken. Da bei größerer Arbeitsbreite auch die zulaufende Streugutmenge größer ist, spricht man hier vom sogenannten "Mengeneffekt" zur Abgrenzung gegenüber dem vorgenannten "Pralleffekt". Die durch den "Mengeneffekt" entstehende Unregelmäßigkeit im Streubild läßt sich beim Anschlußfahren nicht beseitigen.

Um die negativen Auswirkungen, insbesondere des "Mengen effektes", zu reduzieren, werden beispielsweise statt zwei Wurfflügel vier Wurfflügel auf der Schleuderscheibe symmetrisch angeordnet. Die - im übrigen nur geringe - Verbesserung hinsichtlich des "Mengeneffektes" führt dabei in der Regel zu einer Verschlechterung in den Auswirkungen des "Pralleffektes". Ähnlich verhält es sich bei einer anderen bekannten Ausführung (GB-A-1 045 370), bei der mehrere Scheiben übereinander angeordnet und mit einem zentralen Loch versehen sind, in das der Streugutstrahl eintritt. Die Innenkanten der Flügel jeder Scheibe liegen auf einem einzigen Durchmesser, der jedoch von Scheibe zu Scheibe von oben nach unten kleiner wird, so daß der Streugutstrahl auf die mehreren Scheiben verteilt wird. Auch hat man versucht, dem Problem durch verstellbare Wurfflügel zu begegnen, um dem Streugut je nach Streubreite unterschiedliche Abgangswinkel zu verschaffen. Bei allen bekannten Maßnahmen kommt es allenfalls zu einer geringfügigen Verbesserung, nicht aber zu einer auch nur annähernden Beseitigung der nachteiligen Folgen des "Mengeneffektes" und des "Pralleffektes".

Der Erfindung liegt die Aufgabe zugrunde, einen Schleuderstreuer so auszubilden, daß die negativen Auswirkungen, insbesondere des "Mengeneffektes", aber auch des "Pralleffektes", auf das Streubild so weit als möglich gemindert bzw. beseitigt werden.

Ausgehend von dem Schleuderstreuer des eingangs genannten Aufbaus wird diese Aufgabe der Erfindung dadurch gelöst, daß in Umlaufrichtung der Schleuderscheibe unmittelbar vor jedem Wurfflügel wenigstens ein weiterer kürzerer Wurfflügel angeordnet ist, der sich nur über einen Teil der radialen Ausdehnung des Streugutstrahls und von dort zum Umfang der Schleuderscheibe erstreckt, wobei der kürzere Wurfflügel mit dem längeren Wurfflügel derart verbunden ist, daß sie zumindest über die radiale Erstreckung des Streugutstrahls eine gemeinsame geschlossene Oberseite aufweisen.

Praktische Versuche mit einem Schleuderstreuer des vorgenannten Aufbaus haben gezeigt, daß vor allem bei großen Streumengen die durch den Mengeneffekt erzeugten beiderseits der Streuachse auftretenden Überhöhungen im Streubild erheblich abgeflacht werden und bei nur einem Wurfflügel, dem jeweils ein kürzerer Wurfflügel zugeordnet ist, ein wesentliches besseres Streubild erhalten wird, als beispielsweise bei zwei oder vier symmetrisch angeordneten Wurfflügeln. Auch die auf Pralleffekte zurückzuführende Überhöhung in der Streuachse wird gegenüber der bekannten Ausführung mit zwei oder vier symmetrisch angeordneten Wurfflügeln abgeflacht. Die Ursache dürfte darin liegen, daß der zunächst in den Düngerstrahl eintretende kürzere Wurfflügel nur einen Teil, nämlich den außen liegenden Teil des Streugutstrahls erfaßt, während der nachlaufende längere Wurfflügel den restlichen Teil erfaßt. Dadurch wird die insgesamt dem Wurforgan zulaufende Streugutmenge auf zwei Wurfflügel verteilt, die das Streugut nach außen beschleunigen und quasi nacheinander am äußeren Ende abgeben. Es kommt auch nicht mehr, wie dies bei den bekannten Schleuderscheiben feststellbar ist, zu einem zu starken Aufbau des Streugutes innerhalb des Wurfflügels, der wiederum zu stark unterschiedlichen Abgangsgeschwindigkeiten führt. Auch die Prallverluste werden gemindert, da nicht mehr zwei bzw. vier Wurforgane pro Umlauf, sondern nur ein bzw. zwei Wurforgane durch den Streugutstrahl hindurchtreten. Hierdurch werden die Prallverluste weiter verringert, da bei jedem Eintritt eines aus dem längeren und dem kürzeren Wurfflügel gebildeten Wurforgans die Prallmöglichkeiten reduziert werden. Auch wird ein weiterer Nachteil vor allem der vierflügligen Ausführungsform beseitigt. Durch das viermalige Eintauchen eines Wurfflügels je Umlauf in den Streugutstrahl kann dieser sich nicht ungehindert ausbilden mit der Folge, daß die Zulaufmenge begrenzt ist, insbesondere entspricht die aufgrund der Einstellung des Öffnungsquerschnittes des Auslaufs zu erwartende Streumenge nicht der tatsächlich abgegebenen Streumenge, was auf Rückstaueffekte oder dergleichen zurückzuführen ist. Dieser negative Effekt kann bei entsprechend hoher Drehzahl (Durchlauffrequenz der Wurfflügel) sogar zur Begrenzung des Mengendurchsatzes führen.

Vorzugsweise erstreckt sich der kürzere Wurfflügel etwa über die äußere Hälfte der radialen Ausdehnung des Streugutstrahls. Auf diese Weise nimmt der vorlaufende kürzere Wurfflügel etwa die Hälfte und der längere Wurfflügel etwa die andere Hälfte der austretenden Menge auf, wodurch die negativen Auswirkungen des "Mengeneffektes" stark reduziert werden.

Mit Vorteil ist der längere Wurfflügel, wie an sich bekannt, um das Maß x gegenüber der Umlaufrichtung zurückgestellt. "Zurückgestellt" heißt hierbei, daß der Wurfflügel nicht auf einem Radius der Schleuderscheibe angeordnet ist, sondern hierzu parallel in Umlaufrichtung versetzt ist. Mit einer solchen Rückstellung des Wurfflügels werden kleinere Streubreiten abgedeckt. Erfindungsgemäß ist nun auch der kürzere Wurfflügel um ein Maß y gegenüber der Umlaufrichtung zurückgestellt. Dabei hat es sich als vorteilhaft erwiesen, wenn y > x ist, so daß die Streugutpartikel unter unterschiedlichen Winkeln an den Wurfflügeln abgehen und in unterschiedlicher Entfernung auf den Boden niedergehen, so daß ein großer Bereich der Streubreite gleichmäßig abgedeckt wird.

Wie bei bekannten Ausführungen ist auch bei der erfindungsgemäßen Ausbildung von Vorteil, wenn der längere Wurfflügel mit seinem äußeren Ende über den Umfang der Schleuderscheibe hinausragt. Diese Ausbildung wird erfindungsgemäß dadurch weiterentwickelt, daß auch der kürzere Wurfflügel über den Umfang der Schleuderscheibe hinausragt, wobei jedoch sein Überstand geringer ist als der des längeren Wurfflügels. Auch hiermit werden durch die beiden Wurfflügel unterschiedliche Wurfweiten erreicht.

Dem "Mengeneffekt" läßt sich bei einem Schleuderstreuer des eingangs genannten Aufbaus weiterhin dadurch wirksam begegnen, daß wenigstens die längeren Wurfflügel an ihrem äußeren Ende zumindest über einen Teil ihrer Höhe von oben nach außen abgeschrägt sind. Eine weitere Verbesserung läßt sich erreichen, wenn auch die kürzeren Wurfflügel in ähnlicher Weise abgeschrägt sind.

Auch hiermit läßt sich eine Verbesserung hinsichtlich des Mengeneffektes erreichen. Die Ursache dürfte in folgender Überlegung liegen: Bei kleinen Streumengen wandert das Streugut vornehmlich im unteren Bereich des Wurfflügels nach außen. Mit zunehmender Streumenge steigt das Streugut im Wurfflügel nach oben. Zugleich füllt sich der Wurfflügel stärker, das heißt das Streugut erreicht innerhalb des Wurfflügels eine gewisse Schichtdicke, wobei die Streugutpartikel in den einzelnen Schichten unterschiedlich beschleunigt werden. Die dadurch zu vermutenden negativen Effekte auf das Streubild werden durch die Abschrägung des Wurfflügels am äußeren Ende reduziert, indem die im Wurfflügel oben bewegten Streugutpartikel den Wurfflügel eher verlassen als die weiter unten bewegten Partikel, so daß sie auf eine geringere Wurfweite als letztere kommen, insgesamt also eine Vergleichmäßigung der Streumenge über der Streubreite und damit ein flacheres Streubild erreicht wird.

Üblicherweise sind die Wurfflügel aus einem sich in Umlaufrichtung öffnenden U-Profil gebildet, das gegebenenfalls bis zu einem C-Profil variiert werden kann. Beim erfindungsgemäß ausgebildeten Schleuderstreuer ist auch der kürzere Wurfflügel aus einem solchen Profil gebildet, wobei der obere Schenkel des kürzeren Wurfflügels zumindest über die gesamte radiale Erstreckung des Streugutstrahls an den oberen Schenkel des längeren Wurfflügels anschließt, um die bereits zuvor erwähnte geschlossene Oberseite in demjenigen Bereich, der in den Streugutstrahl eintaucht, zu gewährleisten und dadurch die Prallverluste zu minimieren. Zweckmäßigerweise ist dabei die Ausbildung so getroffen, daß die oberen Schenkel des längeren und des kürzeren Wurfflügels zumindest über die gesamte radiale Erstreckung des Streugutstrahls einteilig ausgebildet sind.

Gemäß einem weiteren Merkmal der Erfindung ist vorgesehen, daß der obere Schenkel des längeren Wurfflügels mit seiner vorlaufenden Kante vom inneren Ende des Wurfflügels ausgehend in einer Krümmung in die vorlaufende Kante am oberen Schenkel des kürzeren Wurfflügels übergeht, wobei weiterhin von Vorteil ist, wenn der längere Wurfflügel mit seinem inneren Ende über das Zentrum der Schleuderscheibe hinaus auf deren andere Seite reicht.

Mit dieser Ausbildung weist das aus dem längeren Wurfflügel und dem kürzeren Wurfflügel bestehende Wurforgan nur eine einzige vorlaufende Kante auf, was wiederum zu einer Reduzierung der Prallverluste führt. Trotz der zwei Wurfflügel tritt nur eine vorlaufende Kante in den Streugutstrahl ein, so daß die Streugutpartikel einerseits weniger Prallflächen vorfinden, andererseits besser "eingefangen" werden. Durch die Krümmung der vorlaufenden Kante und ferner durch die Verlängerung des Wurfflügels am inneren Ende ist ferner gewährleistet, daß die von der vorlaufenden Kante abprallenden Partikel nach außen und nicht nach innen beschleunigt werden.

Ein weiteres wesentliches Merkmal der Erfindung besteht darin, daß der Steg des U-Profils des kürzeren Wurfflügels an seinem inneren Ende in Drehrichtung nach vorne gebogen ist.

Durch diese Maßnahme wird vermieden, daß die beim Eintreten des kürzeren Wurfflügels in den Streugutstrahl auf die Streugutpartikel wirkenden Impulskräfte einen Teil der Partikel nach innen beschleunigen, die dann entweder in die Prallverluste eingehen oder erst von dem nachlaufenden längeren Wurfflügel erfaßt werden. Es wird also von dem kürzeren Wurfflügel der ihm zugedachte Teil des Streugutstrahls von der vorlaufenden Kante des oberen Schenkels einerseits und von dem nach vorne gebogenen inneren Ende des Stegs andererseits gleichsam herausgeschält und nur nach außen beschleunigt.

Dabei ist es von Vorteil, wenn das nach vorne gebogene innere Ende des Stegs des kürzeren Wurfflügels konzentrisch zur Achse der Schleuderscheibe gekrümmt ist, wodurch der Anteil des vom kürzeren Wurfflügel erfaßten Streugutstrahls genau definiert ist.

Weiterhin ist von Vorteil, wenn der Steg mit seinem inneren Ende zumindest bis zur vorlaufenden Kante des oberen Schenkels des kürzeren Wurfflügels nach vorne gezogen ist. Auch hierdurch wird das Einfangen abprallender Partikel weiter begünstigt, ohne daß die Prallverluste durch die nun vorne liegende Kante des Stegs nennenswert erhöht werden. Diese lassen sich in jedem Fall noch dadurch reduzieren, daß der Steg mit seinem inneren Ende über die vorlaufende Kante des oberen Schenkels des kürzeren Wurfflügels hinaus nach vorne gezogen ist und in diesem Bereich eine bis in die Ebene der Schleuderscheibe abnehmende Höhe aufweist.

Erfindungsgemäß ist weiterhin vorgesehen, daß die Schleuderscheibe im Zentrum eine Kappe aufweist, die höher ist als das U-Profil des längeren Wurfflügels, und daß dessen Steg mit seinem inneren Ende an der Kappe anliegt.

Durch diese Ausführungsform wird der Wurfflügel innenseitig durch die Kappe gleichsam abgeschlossen und dadurch vermieden, daß nach innen abprallende Partikel am inneren Ende des Wurfflügels austreten können und somit den Prallverlusten zuzurechnen sind.

Der vorgenannte positive Effekt wird gemäß einem weiteren Ausführungsbeispiel noch dadurch verbessert, daß der obere Schenkel des längeren Wurfflügels über das innere Ende dessen Stegs hinaus verlängert ist und mit seiner rückwärtigen Kante der Kappe anliegt, während seine vorlaufende Kante an der Kappe ansetzt und mit größer werdendem radialem Abstand von der Achse der Schleuderscheibe allmählich in die vorlaufende Kante des oberen Schenkels des kürzeren Wurfflügels übergeht.

Der obere Schenkel ist also noch weiter nach innen gezogen als der Steg des U-Profils des längeren Wurfflügels. Er kann sogar bis über das Zentrum hinaus auf die andere Seite der Schleuderscheibe gezogen sein. Damit werden insbesondere die großen Prallverluste im inneren Bereich der Schleuderscheibe weiter reduziert.

Eine optimierte Ausführung hinsichtlich des Pralleffektes ergibt sich dann, wenn die vorlaufende Kante des oberen Schenkels des längeren Wurfflügels von der Ansatzstelle an der Kappe über eine spiralförmige Krümmung und eine daran anschließende entgegengesetzte Krümmung in die vorlaufende Kante des oberen Schenkels des kürzeren Wurfflügels übergeht.

Bei Schleuderstreuern der hier in Rede stehenden Art sitzt die Schleuderscheibe auf einer Nabe der unterhalb von ihr angeordneten Antriebswelle. Erfindungsgemäß kann nun die Schleuderscheibe mittels der Kappe auf der Nabe befestigt sein.

Alle vorgenannten Maßnahmen sind in gleich vorteilhafterweise bei beliebiger Anordnung des Auslaufs am Vorratsbehälter anwendbar. Befindet sich der Auslauf am Boden des Vorratsbehälters, so ist vorgesehen, daß zumindest die vorlaufende Kante des längeren und des kürzeren Wurfflügels zumindest im Bereich der radialen Erstreckung des Auslaufs wenig niedriger als die Unterkante des Auslaufs angeordnet ist.

Durch diese Maßnahme wird die freie Fallstrecke zwischen dem Auslauf und dem Wurfflügel auf ein Minimum reduziert, wodurch sich die Prallverluste weiterhin verringern lassen, und es wird ferner, vermieden, daß auf den oberen Schenkel auftreffende Partikel zu wenig beschleunigt werden und nach hinten abrollen.

Gemäß einem weiteren Merkmal der Erfindung ist vorgesehen, daß der obere Schenkel des längeren und des kürzeren Wurfflügels zumindest im Bereich der radialen Erstreckung des Auslaufs von der vorlaufenden Kante nach hinten und unten schwach geneigt ist.

Bei dieser Ausführungsform tritt in den Streugutstreuer praktisch nur eine Kante ein, die eine definierte Menge vom Streugutstrahl abtrennt. Insbesondere werden Rückstaueffekte durch eine zur Ebene des Auslaufs parallele Fläche am Wurfflügel vermieden.

Bei den bekannten Schleuderstreuern wird der Auslauf häufig von einem eine Öffnung im Boden des Vorratsbehälters nach unten verlängernden Auslaufschacht gebildet. Durch diesen Auslaufschacht erhält das Streugut eine gewisse freie Fallstrecke. Erfindungsgemäß ist nun vorgesehen, daß der obere Schenkel zumindest des kürzeren Wurfflügels in seinem sich von der radial äußersten Begrenzung des Auslaufschachtes nach außen anschließenden Abschnitt höher als die Unterkante des Auslaufschachtes angeordnet ist.

Mit dieser Ausführungsform werden auch die nach außen und oben abprallenden Partikel von dem höher liegenden Schenkel des kürzeren Wurfflügels eingefangen und in kontrollierter Form nach außen beschleunigt.

Bei dieser Ausführungsform ist von Vorteil, wenn die Innenkante des Stegs des kürzeren Wurfflügels am Übergang zu dem höher liegenden Abschnitt des oberen Schenkels auf einem Radius liegt, der wenig größer ist als der Radius, auf dem die radial am weitesten außen liegende Stelle des Auslaufschachtes liegt.

Auf diese Weise wird beim Vorbeilaufen des kürzeren Wurfflügels am Ablaufschacht auch nach hinten eine Art Abschluß erhalten, der Prallverluste in dieser Richtung verhindert.

Schließlich ist es zweckmäßig, wenn der höher liegende Abschnitt des oberen Schenkels des kürzeren Wurfflügels parallel zum Boden des Vorratsbehälters und wenig unterhalb desselben liegt.

Beim Eintauchen der Wurfflügel wird ein Teil der Partikel auch nach innen reflektiert, die gleichfalls in die Prallverluste eingehen. Diese Prallverluste lassen sich erfindungsgemäß dadurch vermeiden, daß die Kappe die ihr benachbarte Unterkante des Auslaufschachtes nach oben überragt.

Bei einem weiteren Ausführungsbeispiel der Erfindung ist vorgesehen, daß der Auslaufschacht zumindest entlang seiner der Eintrittsseite der Wurfflügel in den Düngerstrahl gegenüberliegenden Begrenzung mit flexiblen, in Drehrichtung der Wurfflügel ausweichenden Materialstreifen versehen ist, die in die Bewegungsbahn der Wurfflügel hineinragen, wobei diese Ausführung noch dadurch optimiert werden kann, daß die flexiblen Materialstreifen an denjenigen Begrenzungen des Ablaufschachtes angeordnet sind, an denen sie bei Durchlauf der Wurfflügel durch den Düngerstrahl nicht in den Düngerstrahl ausweichen.

Durch die flexiblen Materialstreifen wird der Streugutstrahl gleichsam "eingefaßt" und es werden die Partikel durch die flexiblen Materialstreifen zurückgehalten bzw. am Abprallen nach vorne und außen gehindert.

Vorzugsweise sind die flexiblen Materialstreifen von Kunststoffborsten gebildet, die einerseits den vorbeilaufenden Wurfflügen ausweichen können, andererseits aufgrund ihres Rückstellvermögens immer wieder in die ursprüngliche Form gelangen, in der sie den Streugutstrahl "einfassen".

Eine weiterhin bevorzugte Ausgestaltung ergibt sich dann, wenn an jeder Schleuderscheibe wenigstens zwei Paar von Wurfflügeln angeordnet sind, die unter verschiedenen Winkeln bezüglich der Drehrichtung angestellt sind. Es sind also die beiden längeren und kürzeren Wurfflügel jedes Wurforgans unter vier verschiedenen Winkel angestellt, so daß sie vier verschiedene Wurfweiten abdecken.

Weiterhin ist von Vorteil, wenn der Auslaufschacht einen von der Auslauföffnung zu seiner Unterkante zunehmenden Querschitt aufweist, wodurch auch bei hoher Drehzahl Rückstaueffekte vermieden werden.

Erfindungsgemäß ist weiterhin vorgesehen, daß bei Änderung des Querschnitts der Auslauföffnung der Flächenschwerpunkt des freien Querschnitts mit zunehmender Streumenge nach außen wandert, wobei ferner von Vorteil ist, wenn der Flächenschwerpunkt mit zunehmender Streumenge entgegen der Drehrichtung nach außen wandert. Mit dieser Ausbildung wird der Aufgabepunkt in Abhängikeit von der Streumenge in einer das Streubild weiterhin begünstigenden Weise geändert.

Eine weitere Verringerung insbesondere des "Mengeneffektes" ergibt sich dann, wenn das innere Ende des vorlaufenden Wurfflügels für große Streumengen und/oder große Arbeitsbreiten radial weiter außen liegt als für kleinere Streumengen und/oder kleine Streubreiten. Dem liegt die praktische Erkenntnis zugrunde, daß der Streugutstrahl sich mit zunehmenden Mengendurchsatz an der Auslauföffnung, sei es, um auf einer vorgegebenen Arbeitsbreite eine größere Streumenge oder eine vorgegebene Streumende auch bei Vergrößerung der Arbeitsbreite einzuhalten, in Richtung zum Umfang der Schleuderscheibe ausdehnt oder gar wandert. Mit der vorgenannten Maßnahme ist sichergestellt, daß trotz des größeren Mengendurchsatzes der negative "Mengeneffekt" nicht zur Wirkung kommt.

Das vorgenannte Prinzip läßt sich auf technisch verschiedene Weise verwirklichen. Sind beispielsweise, wie bekannt, für kleine und große Arbeitsbreiten und/oder Streumengen auswechselbare Schleuderscheiben mit unterschiedlicher Ausbildung und/oder Anordnung der Wurfflügel vorgesehen, so kann bei der Schleuderscheibe für die kleinere Arbeitsbreite und/oder kleinere Streumenge das innere Ende des vorlaufenden Wurfflügels radial weiter innen liegen als bei der Schleuderscheibe für die größere Arbeitsbreite und/oder Streumenge.

Sind statt dessen verschiedene Wurfflügel an der Schleuderscheibe austauschbar angeordnet, so kann erfindungsgemäß vorgesehen sein, daß zumindest der jeweils vorlaufende Wurfflügel austauschbar ist derart, daß das innere Ende des vorlaufenden Wurfflügels für die kleine Arbeitsbreite und/oder Streumenge radial weiter innen liegt als dasjenige des vorlaufenden Wurfflügels für große Arbeitsbreiten und/oder Streumengen.

Statt dessen ist es auch möglich, daß wenigstens der innere Wurfflügel an der Schleuderscheibe verstellbar angeordnet ist derart, daß er für große Arbeitsbreiten und/oder große Streumengen auf der Schleuderscheibe nach außen wandert, so daß dem "Mengeneffekt" nur durch eine einfache, gegebenenfalls vorgegebene Verstellung der vorlaufenden Wurfflügel Rechnung getragen wird. Selbstverständlich können auch die längeren Wurfflügel mitverstellt werden, ohne daß sich ihre Lage bezüglich des Streugutstrahls notwendigerweise ändern muß.

In einer einfachsten Ausführung des vorgenannten Prinzips ist vorgesehen, daß bei einer Schleuderscheibe mit zwei Paaren von Wurfflügeln das innere Ende des vorlaufenden Wurfflügels des einen Paars auf einem anderen Radius liegt als bei dem anderen Paar.

Eine optimierte Ausführung zeichnet sich dadurch aus, daß bei einer einstellbaren Auslauföffnung mit einem freien Querschnitt, dessen Flächenschwerpunkt in Abhängigkeit von der Einstellung (Menge) mit Bezug auf die Schleuderscheibe wandert, das innere Ende des vorlaufenden Wurfflügels auf etwa dem gleichen Radius liegt wie der Flächenschwerpunkt. Die Ausführungsform trägt der Tatsache Rechnung, daß in der Praxis der freie Querschnitt der Auslauföffnung über den gesamten Einstellbereich keine einfache symmetrische Form hat und infolgedessen der Flächenschwerpunkt auf einer Kurve wandert.

Nachstehend ist die Erfindung an Hand einiger in der Zeichnung wiedergegebenen Ausführungsbeispiele beschrieben. In der Zeichnung zeigen:
Figur 1 eine schematische Teilansicht eines Zweischeibenstreuers für Dünger;
Figur 2 ein Streubild-Diagramm;
Figur 3 eine perspektivische Ansicht einer ersten Ausführungsform der Wurfflügel;
Figur 4 eine Draufsicht auf eine Schleuderscheibe mit einer zweiten Ausführungsform der Wurfflügel;
Figur 5 die Wurfflügel gemäß Figur 4 in perspektivischer Ansicht;
Figur 6 einen Schnitt VI-VI gemäß Figur 5;
Figur 7 eine der Figur 4 entsprechende Ansicht einer Schleuderscheibe mit einer abgewandelten Ausführung der Wurfflügel;
Figur 8 einen Schnitt VIII-VIII gemäß Figur 7;
Figur 9 eine der Figur 1 ähnliche Ansicht einer abgewandelten Ausführungsform;
Figur 10 eine ähnliche Ansicht eines weiteren Ausführungsbeispiels und
Figur 11 eine Draufsicht auf die Schleuderscheiben gemäß Figur 10.

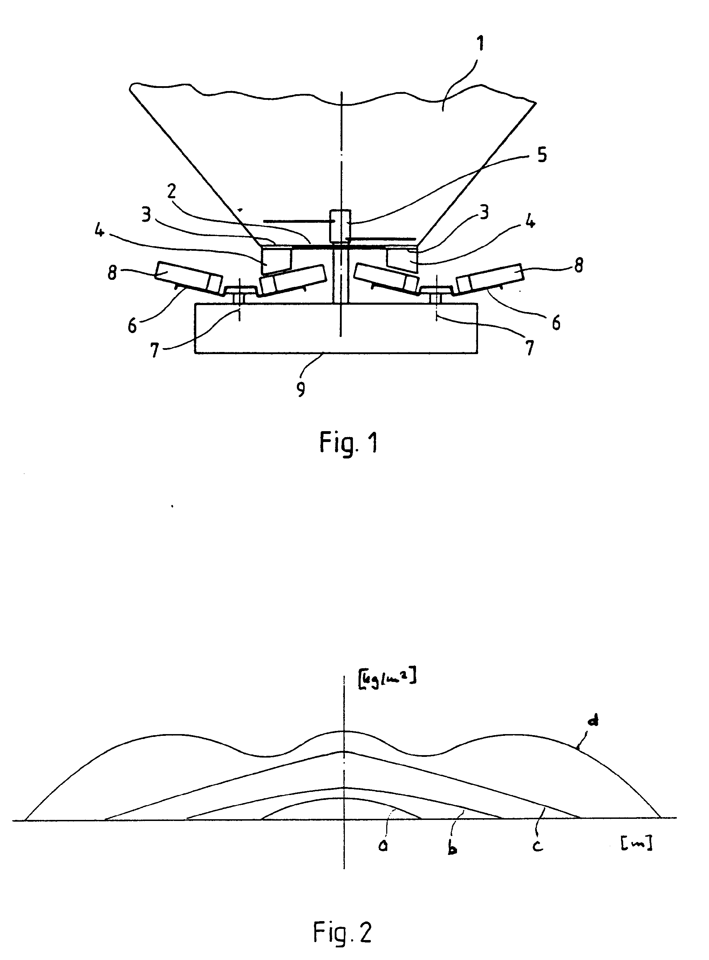

Der in Figur 1 schematisch und ausschnittsweise wiedergegebene Düngerstreuer weist einen trichterförmigen Vorratsbehälter 1 mit einem Boden 2, darin angeordneten Auslauföffnungen 3 und daran anschließende, die Auslauföffnungen nach unten verlängernde Auslaufschächte 4 auf. Innerhalb des Vorratsbehälters 1 ist ein den Dünger lockernder und rieselfähig haltender Rührer 5 angeordnet. Unterhalb des Bodens 2 des Vorratsbehälters 1 ist unter jedem Auslaufschacht 4 eine Schleuderscheibe 6 angeordnet, deren Drehachse gegenüber dem Auslaufschacht 4 jeweils nach außen versetzt ist. Jede Schleuderscheibe weist beim gezeigten Ausführungsbeispiel zwei Wurfflügel 8 auf, die sich vom Zentrum der Schleuderscheibe nach außen erstrecken. Die Schleuderscheiben 6 und der Rührer 5 werden beispielsweise von der Zapfwelle eines Schleppers über Kegelradgetriebe angetrieben, die in dem schematisch wiedergegebenen Getriebegehäuse 9 untergebracht sind.

Die Schleuderscheiben 6 sind bei dem in Figur 1 gezeigten Ausführungsbeispiel tellerförmig mit nach oben ansteigender Wandung ausgebildet, so daß auch die Wurfflügel 8 entsprechend geneigt nach oben verlaufen. Diese Ausbildung ist insbesondere für große Arbeitsbreiten geeignet, um eine günstige Ballistik für die die Schleuderscheibe 6 verlassenden Düngerpartikel zu erzielen.

Ein von einem Schleuderstreuer gemäß Figur 1 erzeugtes typisches Streubild für eine bestimmte Arbeitsbreite ist in dem Diagramm gemäß Figur 2 wiedergegeben, in welchem die Streudichte (Gewicht pro Fläche) über der Streubreite aufgetragen ist. Es sind vier charakteristische Streubilder für vier verschiedene Streumengen a, b, c und d gezeigt, wobei a < b < c < d ist. Die Ordinate fällt mit der Längsachse des Schleppers bzw. der Fahrtrichtung zusammen. Aus Figur 2 ist ersichtlich, daß bei kleineren Streumengen die Streudichte von einem Maximum hinter dem Schlepper stetig nach außen abfällt. Je größer die Streumenge wird, um so ausgeprägter wird die Überhöhung in der Schlepperachse. Ab einer gewissen Streumenge bildet sich ein Streubild aus, wie es in Figur 2 an Hand der Kurve d die größte Streumenge gezeigt ist. Es handelt sich hier nicht mehr um eine stetige Kurve, vielmehr weist sie neben der mittigen Überhöhung nach außen hin je eine Senke und daran anschließend wiederum Überhöhungen auf, von denen aus die Streudichte dann wesentlich steiler abfällt. Die Kurve d gilt beispielsweise für eine Schleuderscheibe mit zwei Wurfflügeln. Weist diese hingegen vier Wurfflügel auf, so sind die beiden seitlichen Überhöhungen nicht oder weniger ausgeprägt vorhanden, dafür jedoch ist die mittlere Überhöhung wesentlich stärker ausgeprägt.

Bei kleinen und mittleren Streumengen lassen sich die Ausdünnungen im äußeren Bereich dadurch kompensieren, daß beim Anschlußfahren für eine Überlappung der Streubilder gesorgt wird, so daß sich über die gesamte bestreute Fläche ein nur schwach welliges Streubild ergibt. Bei größeren Streumengen ist ein Kompensieren allenfalls noch in den Randbereichen möglich, jedoch lassen sich weder die mittlere Überhöhung, noch die daran anschließenden Senken und auch nur äußerst mangelhaft die beiden seitlichen Überhöhungen kompensieren.

Während die mittlere Überhöhung fast ausschließlich durch den sogenannten Pralleffekt bzw. durch die Prallverluste entsteht, das heißt durch jene Düngerpartikel, die von den Wurfflügeln 8 nicht in kontrollierter Weise erfaßt werden, sondern auf der Scheibe selbst und an den am Auslaufschacht 4 vobeilaufenden Wurfflügeln 8 reflektiert werden und sich vornehmlich in der Mitte ablagern, entstehen die beiden seitlichen Überhöhungen durch den sogenannten Mengeneffekt und sind vornehmlich auf nicht beeinflußbare strömungstechnische Vorgänge im Wurfflügel zurückzuführen. Auch mit zunehmender Arbeitsbreite nehmen die Prallverluste aufgrund des notwendigerweise größeren Mengendurchsatzes zu, wie auch der Mengeneffekt stärker wird.

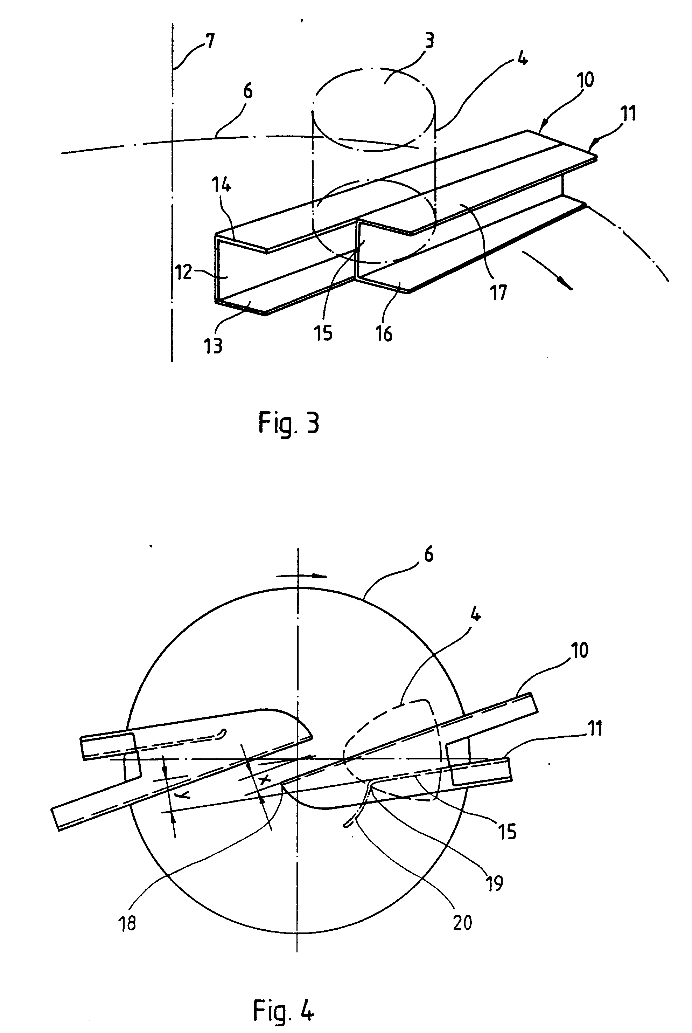

In Figur 3 ist eine erste und einfachste Ausführungsform zur Reduzierung des Mengeneffektes gezeigt. Auf der Schleuderscheibe 6 sind zwei Wurforgane symmetrisch, also etwa einander gegenüberliegend angeordnet. Figur 3 zeigt eines dieser Wurforgane, das aus einem längeren Wurfflügel 10 von gegebenenfalls herkömmlicher Anordnung und Ausbildung und einem kürzeren Wurfflügel 11 besteht. Der längere Wurfflügel 10 reicht aus dem Bereich des Zentrums der Schleuderscheibe 6 nach außen, während der kürzere Wurfflügel 11 mit größerem Abstand vom Zentrum ansetzt und gleichfalls nach außen verläuft. Während der längere Wurfflügel 10 bei Umlauf der Schleuderscheibe 6 am gesamten Querschnitt des Auslaufschachts 4 vorbeiläuft, erstreckt sich der kürzere Wurfflügel 11 nur über einen Teil der radialen Erstreckung des Auslaufs und von dort nach außen.

Bei Umlauf der Schleuderscheibe 6 in der in Figur 3 gezeigten Richtung taucht also zunächst der kürzere Wurfflügel 11 in den den Auslaufschacht 4 verlassenden Düngerstrahl ein. Da seine dem Zentrum zugekehrte Innenkante auf einem größeren Radius liegt als die am weitesten innen liegende Begrenzung des Auslaufschachtes 4 wird von dem kürzeren Wurfflügel 11 ein Teil des Düngerstrahls erfaßt, während der nachlaufende längere Wurfflügel 10 den restlichen Teil des Düngerstrahls mitnimmt. Es wird also die aus dem Auslaufschacht 4 austretende Gesamtmenge bei einem Vorbeilauf des Wurforgans in zwei Teilmengen aufgetrennt und diese Teilmengen von den Wurfflügeln 10,11 getrennt nach außen beschleunigt. Dadurch werden die in Figur 2 wiedergegebenen seitlichen Überhöhungen im Streubild einschließlich der Senken zu der mittleren Überhöhung weitestgehend beseitigt bzw. das Wellenprofil abgeflacht.

Bei dem Ausführungsbeispiel gemäß Figur 3 bestehen beide Wurfflügel 10,11 aus einem U-Profil. So weist der Wurfflügel 10 einen senkrechten Steg 12, einen unteren Schenkel 13 und einen oberen Schenkel 14 auf. Mit dem unteren Schenkel 13 ist der Wurfflügel 10 auf der Schleuderscheibe 6 befestigt. Gleichermaßen weist der Wurfflügel 11 einen senkrecht stehenden Steg 15, einen unteren Schenkel 16, mit dem er auf der Schleuderscheibe 6 befestigt ist, sowie einen oberen Schenkel 17 auf. Um die durch die Anordnung von zwei Wurfflügeln 10,11 zusätzlich entstehenden Prallverluste zu vermeiden, schließt der obere Schenkel 17 des vorlaufenden kürzeren Wurfflügels 11 rückseitig unmittelbar an den oberen Schenkel 14 des nachlaufenden längeren Wurfflügels 10 an. Gegebenenfalls können die beiden oberen Schenkel 14,17 auch einteilig ausgebildet sein. Es wird folglich der den Auslaufschacht 4 verlassende Düngerstrahl im wesentlichen nur von einer in ihn eintauchenden Kante, nämlich den jeweils vorlaufenden Kanten der Schenkel 17 und 14 getroffen, so daß die Prallverluste nicht oder nur unbedeutend größer sind als beim Eintreten nur eines Wurfflügels in den Düngerstrahl.

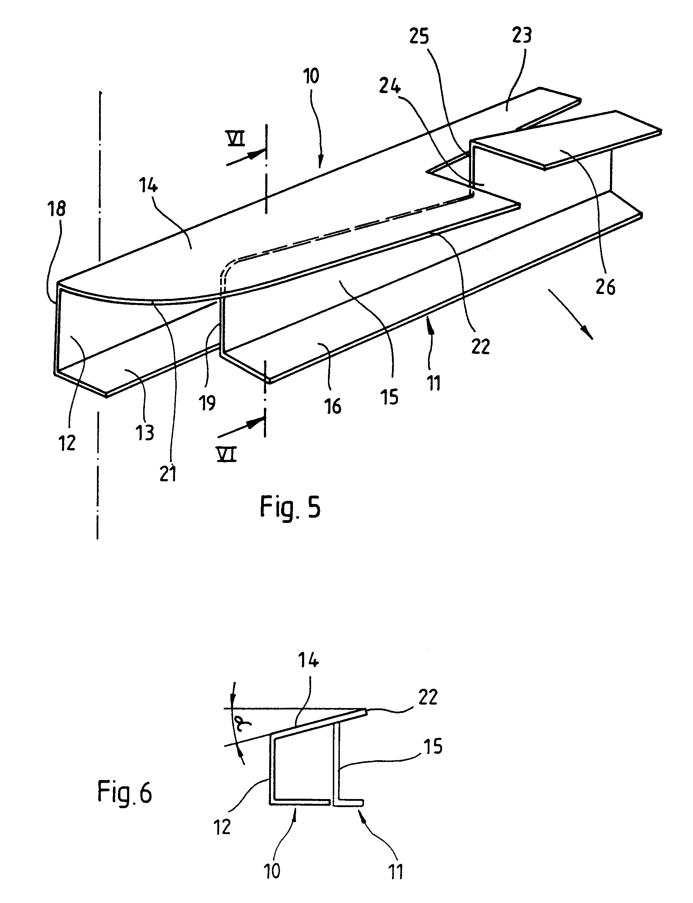

Figur 4 zeigt die bevorzugte Ausführungsform. Der längere Wurfflügel 10 ist, wie an sich bekannt, gegenüber der Drehrichtung um das Maß x zurückgestellt. Ferner verläuft der kürzere Wurfflügel 11 nicht parallel zum Wurfflügel 10, sondern ist demgegenüber so angeordnet, daß sich die Wurfflügel nach außen "öffnen". Der Wurfflügel 11 ist um das Maß y zurückgestellt, wobei y > x ist. Wie weiterhin aus Figur 4 ersichtlich, überragen beide Wurfflügel 10,11 den äußeren Umfang der Schleuderscheibe 6, wobei der Überstand des längeren Wurfflügels 10 größer ist als der des vorlaufenden kürzeren Wurfflügels 11. Ferner zeigt Figur 4, daß der längere Wurfflügel 10 mit seinem inneren Ende 18 über das Zentrum der Schleuderscheibe 6 hinaus auf die andere Seite verlängert ist, wodurch insbesondere die Prall-Prallverluste durch nach innen abspringende Partikel geverluste durch nach innen abspringende Partikel gemindert werden, indem diese von dem längeren Wurfflügel 10 eingefangen werden. Der gleichen Maßnahme dient die besondere Ausbildung des Stegs 15 des kürzeren Wurfflügels 11, der an seinem innen liegenden Ende 19 in Drehrichtung nach vorne abgebogen ist. Diese Abbiegung kann bis zur vorlaufenden Kante des Wurfflügels verlaufen, so daß auch an dieser Stelle gleichsam eine Schneidkante in den Düngerstrahl eintritt und die möglichen Prallflächen minimiert werden. Dieses nach vorne gezogene Ende 19 verläuft vorzugsweise konzentrisch zum Mittelpunkt der Schleuderscheibe 6 und kann, wie in Figur 4 strichpunktiert wiedergegeben, auch über die vorlaufende Kante des Wurfflügels sich er strecken, wobei dieser Abschnitt 20 mit stetig abnehmender Höhe in die Ebene der Schleuderscheibe 6 abfällt.

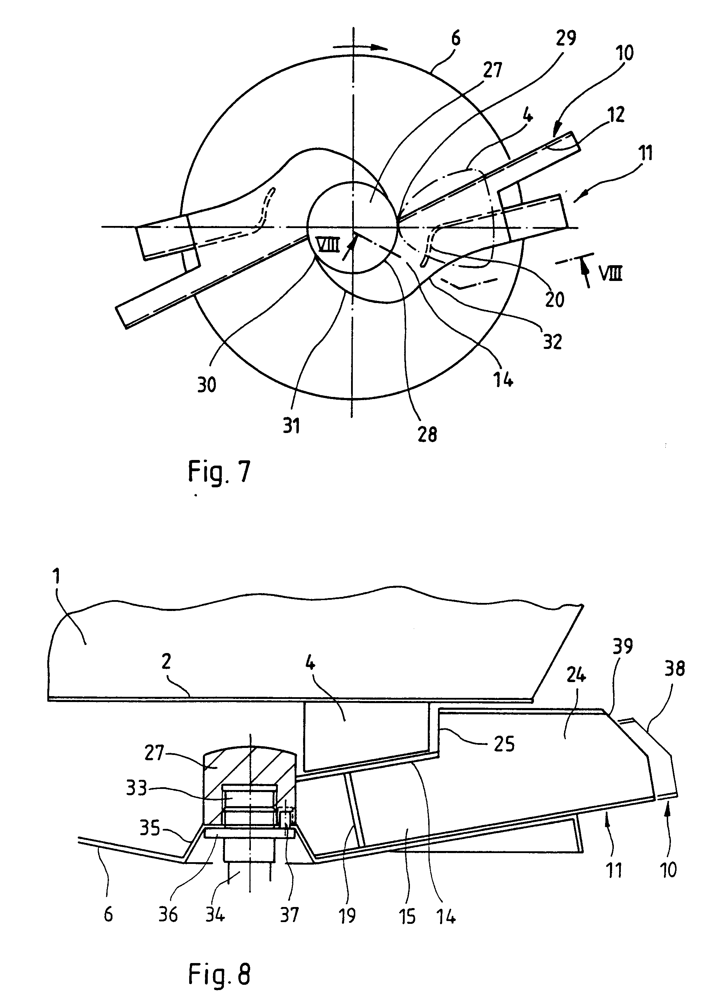

Figur 5 zeigt weitere Einzelheiten der Ausführungsform gemäß Figur 4. Der obere Schenkel 14 des nachlaufenden längeren Wurfflügels 10 ist über den Steg 15 des kürzeren Wurfflügels 11 nach vorne gezogen und bildet zugleich dessen oberen Schenkel, wobei die vorlaufende Kante 21 des Schenkels 14 vom inneren Ende 18 des längeren Wurfflügels 10 aus in einer stetigen Krümmung in die vorlaufende Kante 22 des kürzeren Wurfflügels 11 übergeht. Im äußeren Bereich, nämlich außerhalb der in radialer Richtung am weitesten außen liegenden Begrenzung des Auslaufschachtes 4 ist der obere Schenkel 14 des längeren Wurfflügels 10 wieder zurückgesetzt, so daß der obere Schenkel 14 mit einem schmaleren Abschnitt 23 ausläuft. An der gleichen Stelle ist der Steg 15 des vorlaufenden kürzeren Wurfflügels 11 in dem Abschnitt 24 nach oben gezogen derart, daß er mit seiner Innenkante 25 am äußeren Umfang des Auslaufschachtes 4 mit geringem Abstand entlangläuft. Entsprechend ist der obere Schenkel des kürzeren Wurfflügels 11 mit seinem Abschnitt 26 höher angeordnet als der obere Schenkel im übrigen Bereich, wobei er, wie Fig.8 zeigt, mit Vorteil parallel zum Boden 2 des Vorratsbehälters 1 und knapp unterhalb desselben vorbeiläuft. Im Falle einer tellerförmig gewölbten Schleuderscheibe, wie sie Figur 1 zeigt, liegen also der obere Schenkel 14 des längeren Wurfflügels 10 und der mit ihm einteilige Abschnitt des oberen Schenkels des kürzeren Wurfflügels in einer zur Oberseite der Schleuderscheibe 6 parallelen Ebene, während der hochgesetzte Abschnitt 26 des oberen Schenkels des kürzeren Wurfflügels 11 horizontal verläuft. Mittels des hochgesetzten Teils des kürzeren Wurfflügels 11, nämlich des höheren Stegs 24 und des höher angeordneten Abschnittes 26 werden die Prallverluste weiterhin reduziert, indem die - mit Bezug auf die Schleuderscheibe - nach außen und nach oben prallenden Partikel eingefangen und vom kürzeren Wurfflügel 11 erfaßt werden.

Der weiteren Reduzierung der Prallverluste dient die in Figur 6 gezeigte Maßnahme, die darin besteht, daß der obere Schenkel 14 mit einem Freiwinkel angestellt ist, so daß die vorlaufende Kante 22 zugleich den höchsten Punkt des in den Düngerstrahl eintauchenden Profils bildet. Aufgrund dieses Freiwinkels gleiten die auf den oberen Schenkel auftreffenden Partikel nach hinten ab und gelangen zu einem großen Teil auf die Schleuderscheibe, um vom nächsten Wurfflügel erfaßt zu werden.

Figur 7 zeigt eine gegenüber Figur 5 abgewandelte Ausführungsform, bei der im Zentrum der Schleuderscheibe 6 eine zylindrische Kappe 27 angeordnet ist, deren Mantel 28 hinsichtlich der beim Eintauchen des längeren Wurfflügels 10 nach innen abprallenden Partikel eine ähnliche Funktion erfüllt, wie der nach vorne und konzentrisch zur Drehachse gekrümmte Abschnitt 20 des Stegs 15 des vorlaufenden Wurfflügels 11. Zu diesem Zweck schließt der längere Wurfflügel 10 mit einem Steg 12 am inneren Ende unmittelbar an den Mantel 28 der Kappe 27 bei 29 an. Der obere Schenkel 14 des längeren Wurfflügels 10 reicht bis zu der etwa gegenüberliegenden Stelle 30 an der Kappe 27. Die vorlaufende Kante des oberen Schenkels 14 verläuft im Abschnitt 31 mit spiralförmiger Krümmung zu größeren Radien und geht dann über eine entgegengesetzte Krümmung 32 in die vorlaufende Kante des kürzeren Wurfflügels 11 über. Durch diese Ausbildung trifft die vorlaufende Kante des oberen Schenkels 14 in praktisch jeder Drehstellung senkrecht auf den Düngerstrahl, so daß die von ihr abprallenden Partikel in Drehrichtung bzw. tangential hierzu beschleunigt und - da ihre Geschwindigkeit nicht größer sein kann als die Umlaufgeschwindigkeit der Wurfflügel - von den Wurfflügeln eingefangen werden.

Mit dieser Ausführungsform wird der Auslaufschacht 4, wie insbesondere aus Figur 8 ersichtlich ist, sowohl nach innen, als auch nach außen eingegrenzt, nämlich einerseits durch die Kappe 27, andererseits durch die hochgezogene Innenkante 25 des äußeren Abschnittes 24 des Stegs 15 des kürzeren Wurfflügels 11.

Die Kappe 27 kann zugleich zur Befestigung der Schleuderscheibe 6 auf der Nabe 33 der Antriebswelle 34 dienen, indem beispielsweise ein nach innen gezogener Flansch 35 der Schleuderscheibe 6 durch Aufschrauben der Kappe auf ein entsprechendes Gewinde der Nabe 33 gegen einen Bund 36 an der Nabe verspannt wird. Ferner kann am Bund 36 ein Mitnehmerstift 37 angeordnet sein, der den Flansch 35 durchsetzt und in einen entsprechenden Schlitz der Kappe 27 eingreift.

In Figur 8 ist eine weitere Maßnahme zur Reduzierung des Mengeneffektes gezeigt. Zu diesem Zweck sind nämlich die beiden Wurfflügel 10,11 an ihren äußeren Enden bzw. die entsprechenden Stege nach außen abgeschrägt, wie dies bei 38 für den längeren Wurfflügel 10 und bei 39 für den kürzeren Wurfflügel 11 gezeigt ist. Dadurch werden die im oberen Teil der Wurfflügel nach außen bewegten Partikel, die um so höher im Wurfflügel steigen, je größer die Streumenge ist, früher vom Wurfflügel abgegeben als die unten bewegten Partikel.

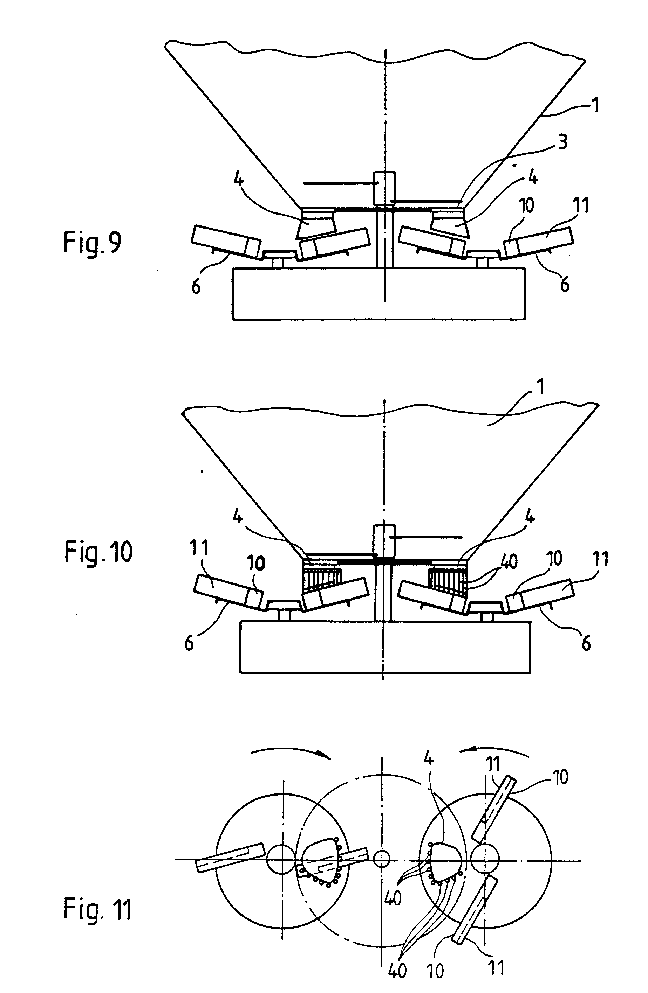

Je größer die Streumenge bzw. die Streubreite ist, um so stärker wird der Mengendurchsatz im Auslaufschacht 4 negativ beeinflußt, was in erster Linie auf Rückstaueffekte zurückzuführen ist. Um dadurch bedingte Verfälschungen der tatsächlichen Streumenge zu eliminieren, erweitern sich die Auslaufschächte 4 von der Auslauföffnung 3 nach unten, wie dies in Figur 9 gezeigt ist. Im übrigen laufen hier, wie auch bei allen anderen Ausführungsformen, die Wurfflügel 10,11 nur mit knappem Abstand unterhalb der Unterkante der Auslaufschächte 4 vorbei, wodurch wiederum die Prallverluste vermindert werden.

Eine weitere Verminderung der Prallverluste läßt sich durch die Ausführungsform gemäß Figur 10 und 11 erreichen. Zu diesem Zweck ist der Auslaufschacht 4 auf einem großen Teil seines Umfangs mit flexiblen Materialstreifen 40, z. B. Kunststoffborsten bzw. Borstenbündeln versehen, die im wesentlichen senkrecht angeordnet sind und mit ihrem unteren Ende bis in die Umlaufbahn der Wurfflügel 10,11 reichen. Dadurch wird der aus dem Auslaufschacht 4 austretende Düngerstrahl, wie insbesondere aus Figur 11 ersichtlich ist, an allen Seiten mit Ausnahme der Eintrittsseite der Wurfflügel eingefaßt und beim Eintreten der Wurfflügel zurückgehalten, so daß praktisch keine Partikel durch Pralleffekte wegspritzen können. Beim Vorbeilauf der Wurfflügel legen sich die flexiblen Materialstreifen in Drehrichtung um und kehren nach Vorbeilauf der Wurfflügel wieder in ihre ursprüngliche Lage zurück.

Zu sämtlichen Ausführungsformen ist anzumerken, daß die Eintauchtiefe des Schenkels 14 des kürzeren Wurfflügels 11 in den Düngerstrahl von der Anordnung und Formgebung des Auslaufschachtes 4 abhängig ist. Sie sollte so gewählt werden, daß etwa 60 % des Querschnittes des Auslaufschachtes 4 von dem kürzeren Wurfflügel bestrichen werden. Bei diesem Wert wird davon ausgegangen, daß der durchschnittliche Verstellbereich der Auslauföffnung für die Einstellung verschiedener Streumengen bei ca. zwei Drittel des gesamten freien Querschnitts liegt, so daß mit dem kürzeren Wurfflügel etwa stets die halbe Menge des austretenden Düngerstrahls erfaßt wird. Noch größere freie Querschnitte am Auslauf werden in der Regel nur für Spezialdüngungen benötigt.

## Patentansprüche

1. Schleuderstreuer bestehend aus einem rieselfähiges Streugut, insbesondere Dünger, enthaltenden Vorratsbehälter (1) mit wenigstens einem einstellbaren Auslauf (3), aus dem das Streugut im Fallstrom strahlartig austritt, und einer darunter um eine versetzt zum Auslauf angeordnete Achse (7) umlaufenden Schleuderscheibe (6) mit wenigstens einem Wurfflügel (8), der sich über die gesamte radiale Ausdehnung des Streugutstrahls zum Umfang der Schleuderscheibe erstreckt, dadurch gekennzeichnet, daß in Umlaufrichtung der Schleuderscheibe (6) unmittelbar vor jedem Wurfflügel (10) wenigstens ein weiterer kürzerer Wurfflügel (11) angeordnet ist, der sich nur über einen Teil der radialen Ausdehnung des Streugutstrahls und von dort zum Umfang der Schleuderscheibe erstreckt, wobei der kürzere Wurfflügel (11) mit dem längeren Wurfflügel (10) derart verbunden ist, daß sie zumindest über die radiale Erstrekkung des Streugutstrahls eine gemeinsame geschlossene Oberseite (14,17) bilden.

2. Schleuderstreuer nach Anspruch 1, dadurch gekennzeichnet, daß sich der kürzere Wurfflügel (11) etwa über die äußere Hälfte der radialen Ausdehnung des Streugutstrahls erstreckt.

3. Schleuderstreuer nach Anspruch 1 oder 2, dadurch gekennzeichnet, daß der längere Wurfflügel (10) um das Maß x gegenüber der Umlaufrichtung zurückgestellt ist.

4. Schleuderstreuer nach einem der Ansprüche 1 bis 3, dadurch gekennzeichnet, daß der kürzere Wurfflügel (11) um das Maß y gegenüber der Umlaufrichtung zurückgestellt ist.

5. Schleuderstreuer nach einem der Ansprüche 1 bis 4, dadurch gekennzeichnet, daß y ≧ x ist.

6. Schleuderstreuer nach einem der Ansprüche 1 bis 5, dadurch gekennzeichnet, daß zumindest der längere Wurfflügel (10) mit seinem äußeren Ende über den Umfang der Schleuderscheibe (6) hinausragt.

7. Schleuderstreuer nach einem der Ansprüche 1 bis 6, dadurch gekennzeichnet, daß beide Wurfflügel (10,11) mit ihren äußeren Enden über den Umfang der Schleuderscheibe (6) hinausragen, wobei der Überstand des längeren Wurfflügels (10) größer ist als der des kürzeren.

8. Schleuderstreuer nach einem der Ansprüche 1 bis 7, dadurch gekennzeichnet, daß wenigstens der längere Wurfflügel (10) an seinem äußeren Ende zumindest über einen Teil seiner Höhe von oben und außen abgeschrägt (38) ist.

9. Schleuderstreuer nach einem der Ansprüche 1 bis 8, dadurch gekennzeichnet, daß auch der kürzere Wurfflügel (11) an seinem äußeren Ende zumindest über einen Teil seiner Höhe von oben nach außen abgeschrägt (39) ist.

10. Schleuderstreuer nach einem der Ansprüche 1 bis 9, wobei der wenigstens eine Wurfflügel aus einem sich in Umlaufrichtung öffnenden U-Profil gebildet ist, dadurch gekennzeichnet, daß auch der kürzere Wurfflügel (11) aus einem U-Profil gebildet ist, und daß der obere Schenkel (17) des kürzeren Wurfflügels (11) zumindest über die gesamte radiale Erstreckung des Streugutstrahls an den oberen Schenkel (14) des längeren Wurfflügels anschließt.

11. Schleuderstreuer nach einem der Ansprüche 1 bis 10, dadurch gekennzeichnet, daß die oberen Schenkel (14, 17) des längeren und des kürzeren Wurfflügels (10, 11) zumindest über die gesamte radiale Erstreckung des Streugutstrahls einteilig ausgebildet sind.

12. Schleuderstreuer nach einem der Ansprüche 1 bis 11, dadurch gekennzeichnet, daß der obere Schenkel (14) des längeren Wurfflügels (10) mit seiner vorlaufenden Kante (21) vom inneren Ende dieses Wurfflügels ausgehend in einer Krümmung in die vorlaufende Kante (22) am oberen Schenkel (17) des kürzeren Wurfflügels (11) übergeht.

13. Schleuderstreuer nach einem der Ansprüche 1 bis 12, dadurch gekennzeichnet, daß der längere Wurfflügel (10) mit seinem inneren Ende über das Zentrum der Schleuderscheibe (6) hinaus auf deren andere Seite reicht.

14. Schleuderstreuer nach einem der Ansprüche 1 bis 13, dadurch gekennzeichnet, daß der Steg (15) des U-Profils des kürzeren Wurfflügels (11) an seinem inneren Ende (19) in Drehrichtung nach vorne gebogen ist.

15. Schleuderstreuer nach einem der Ansprüche 1 bis 14, dadurch gekennzeichnet, daß das nach vorne gebogene innere Ende (19) des Stegs (15) des kürzeren Wurfflügels (11) konzentrisch zur Achse (7) der Schleuderscheibe (6) gekrümmt ist.

16. Schleuderstreuer nach einem der Ansprüche 1 bis 15, dadurch gekennzeichnet, daß der Steg (15) mit seinem inneren Ende (19) zumindest bis zur vorlaufenden Kante (22) des oberen Schenkels (17) des kürzeren Wurfflügels (11) nach vorne gezogen ist.

17. Schleuderstreuer nach einem der Ansprüche 1 bis 16, dadurch gekennzeichnet, daß der Steg (15) mit seinem inneren Ende (19) über die vorlaufende Kante (22) des oberen Schenkels (15) des kürzeren Wurfflügels (11) hinaus nach vorne gezogen ist und in diesem Bereich (20) eine bis in die Ebene der Schleuderscheibe (6) abnehmende Höhe aufweist.

18. Schleuderstreuer nach einem der Ansprüche 1 bis 17, dadurch gekennzeichnet, daß die Schleuderscheibe in ihrem Zentrum eine Kappe (27) aufweist, die höher ist als das U-Profil des längeren Wurfflügels (10), und daß dessen Steg (12) mit seinem inneren Ende (19) an der Kappe (17) anliegt.

19. Schleuderstreuer nach einem der Ansprüche 1 bis 18, dadurch gekennzeichnet, daß der obere Schenkel (14) des längeren Wurfflügels (10) über das innere Ende (29) dessen Stegs (15) hinaus verlängert ist und mit seiner rückwärtigen Kante der Kappe (27) anliegt, während seine vorlaufende Kante an der Kappe (27) ansetzt und mit größer werdendem radialem Abstand von der Achse (7) der Schleuderscheibe (6) allmählich in die vorlaufende Kante (22) des oberen Schenkels (17) des kürzeren Wurfflügels (11) übergeht.

20. Schleuderstreuer nach einem der Ansprüche 1 bis 18, dadurch gekennzeichnet, daß die vorlaufende Kante des oberen Schenkels (14) des längeren Wurfflügels (10) von der Ansatzstelle (30) an der Kappe (27) über eine spiralförmige Krümmung (31) und eine daran anschließende, entgegengesetzte Krümmung (32) in die vorlaufende Kante (22) des oberen Schenkels (17) des kürzeren Wurfflügels (11) übergeht.

21. Schleuderstreuer nach einem der Ansprüche 1 bis 20, wobei die Schleuderscheibe auf einer Nabe der unterhalb von ihr angeordneten Antriebswelle sitzt, dadurch gekennzeichnet, daß die Schleuderscheibe (6) mittels der Kappe (27) auf der Nabe (33) befestigt ist.

22. Schleuderstreuer nach einem der Ansprüche 1 bis 21, wobei der Auslauf am Boden des Vorratsbehälters angeordnet ist, dadurch gekennzeichnet, daß zumindest die vorlaufende Kante (22) des längeren und des kürzeren Wurfflügels (10,11) zumindest im Bereich der radialen Erstreckung des Auslaufs (4) wenig niedriger als die Unterkante des Auslaufs angeordnet ist.

23. Schleuderstreuer nach einem der Ansprüche 1 bis 22, dadurch gekennzeichnet, daß der obere Schenkel (14) des längeren und des kürzeren Wurfflügels (10,11) zumindest im Bereich der radialen Erstreckung des Auslaufs (4) von der vorlaufenden Kante (22) nach hinten und unten schwach geneigt ist.

24. Schleuderstreuer nach einem der Ansprüche 1 bis 23, bei dem der Auslauf von einem eine Öffnung im Boden des Vorratsbehälters nach unten verlängernden Auslaufschacht gebildet ist, dadurch gekennzeichnet, daß der obere Schenkel (17) zumindest des kürzeren Wurfflügels (11) in seinem sich von der radial äußersten Begrenzung des Auslaufschachtes (4) nach außen anschließenden Abschnitt (26) höher als die Unterkante des Auslaufschachtes (4) angeordnet ist.

25. Schleuderstreuer nach einem der Ansprüche 1 bis 24, dadurch gekennzeichnet, daß die Innenkante (25) des Stegs (15,24) des kürzeren Wurfflügels (11) am Übergang zu dem höher liegenden Abschnitt (26) des oberen Schenkels auf einem Radius liegt, der wenig größer ist als der Radius, auf dem die radial am weitesten außen liegende Stelle des Auslaufschachtes (4) liegt.

26. Schleuderstreuer nach einem der Ansprüche 1 bis 25, dadurch gekennzeichnet, daß der höher liegende Abschnitt (26) des oberen Schenkels des kürzeren Wurfflügels (11) parallel zum Boden (2) des Vorratsbehälters (1) und wenig unterhalb desselben liegt.

27. Schleuderstreuer nach einem der Ansprüche 1 bis 26, dadurch gekennzeichnet, daß die Kappe (27) die ihr benachbarte Unterkante des Auslaufschachtes (4) nach oben überragt.

28. Schleuderstreuer nach einem der Ansprüche 1 bis 27, dadurch gekennzeichnet, daß der Auslaufschacht (4) zumindest entlang seiner der Eintrittsseite der Wurfflügel (10,11) in den Düngerstrahl gegenüberliegenden Begrenzung mit flexiblen, in Drehrichtung der Wurfflügel ausweichenden Materialstreifen (40) versehen ist, die in die Bewegungsbahn der Wurfflügel (10,11) hineinragen.

29. Schleuderstreuer nach einem der Ansprüche 1 bis 28, dadurch gekennzeichnet, daß die flexiblen Materialstreifen (40) an denjenigen Begrenzungen des Ablaufschachtes (4) angeordnet sind, an denen sie bei Durchlauf der Wurfflügel (10,11) durch den Düngerstrahl nicht in den Düngerstrahl ausweichen.

30. Schleuderstreuer nach einem der Ansprüche 1 bis 29, dadurch gekennzeichnet, daß die flexiblen Materialstreifen (40) von Kunststoffborsten gebildet sind.

31. Schleuderstreuer nach einem der Ansprüche 1 bis 30, dadurch gekennzeichnet, daß an jeder Schleuderscheibe wenigstens zwei Paare von Wurfflügeln (10,11) angeordnet sind, die unter verschiedenen Winkeln bezüglich der Drehrichtung angestellt sind.

32. Schleuderstreuer nach einem der Ansprüche 1 bis 31, dadurch gekennzeichnet, daß der Auslaufschacht (4) einen von der Auslauföffnung (3) zu seiner Unterkante zunehmenden Querschnitt aufweist.

33. Schleuderstreuer nach einem der Ansprüche 1 bis 32, dadurch gekennzeichnet, daß bei Änderung des Querschnitts der Auslauföffnung (3) der Flächenschwerpunkt des freien Querschnitts mit zunehmender Streumenge nach außen wandert.

34. Schleuderstreuer nach einem der Ansprüche 1 bis 33, dadurch gekennzeichnet, daß der Flächenschwerpunkt mit zunehmender Streumenge entgegen der Drehrichtung nach außen wandert.

35. Schleuderstreuer nach einem der Ansprüche 1 bis 34, wobei für wenigstens zwei verschiedene Arbeitsbreiten und/oder Streumengen je eine Schleuderscheibe oder ein Paar von Schleuderscheiben mit unterschiedlischer Ausbildung und/oder Anordnung der Wurfflügel auswechselbar vorgesehen ist, dadurch gekennzeichnet, daß bei der Schleuderscheibe (6) für die kleinere Arbeitsbreite und/oder kleinere Streumenge das innere Ende (19) des vorlaufenden Wurfflügels radial weiter innen liegt als bei der Schleuderscheibe für die größere Arbeitsbreite und/oder Streumenge.

36. Schleuderstreuer nach einem der Ansprüche 1 bis 34, wobei für wenigstens zwei verschiedene Arbeitsbreiten und/oder Streumengen zwei verschiedene Wurfflügel an der Schleuderscheibe austauschbar angeordnet sind, dadurch gekennzeichnet, daß zumindest der jeweils vorlaufende Wurfflügel (11) austauschbar ist derart, daß das innere Ende (19) des vorlaufenden Wurfflügels (11) für die kleine Arbeitsbreite und/ oder Streumenge radial weiter innen liegt als dasjenige des vorlaufenden Wurfflügels für große Arbeitsbreiten und/oder Streumengen.

37. Schleuderstreuer nach einem der Ansprüche 1 bis 34, dadurch gekennzeichnet, daß wenigstens der vorlaufende Wurfflügel (11) an der Schleuderscheibe (6) verstellbar angeordnet ist derart, daß er für große Arbeitsbreiten und/oder große Streumengen auf der Schleuderscheibe (6) nach außen wandert.

38. Schleuderstreuer nach einem der Ansprüche 1 bis 34, dadurch gekennzeichnet, daß bei einer Schleuderscheibe (6) mit zwei Paaren von Wurfflügeln (10,11) das innere Ende (19) des vorlaufenden Wurfflügels (11) des einen Paars auf einem anderen Radius liegt als bei dem anderen Paar.

39. Schleuderstreuer nach einem der Ansprüche 1 bi 38, dadurch gekennzeichnet, daß bei einer einstellbaren Auslauföffnung (3) mit einem freien Querschnitt, dessen Flächenschwerpunkt in Abhängigkeit von der Einstellung (Menge) mit Bezug auf die Schleuderscheibe (6) wandert, das innere Ende (19) des vorlaufenden Wurfflügels (11) auf etwa dem gleichen Radius liegt wie der Flächenschwerpunkt.

## Claims

1. Centrifugal spreader comprising a storage vessel (1) having at least one adjustable outlet (3) and containing a free-flowing broadcasting material, particularly fertilizer, in which the broadcasting material passes out of said outlet in jet-like free-flowing manner, and a centrifugal disk rotating about an axis (7) displaced with regard to the said outlet and having at least one throwing blade (8), which extends over the entire radial extension of the broadcasting material jet up to the centrifugal disk circumference, characterized in that at least one further, shorter throwing blade (11) is positioned directly upstream of each throwing blade (10) in the rotation direction of the centrifugal disk (6) and extends over only part of the the radial extension of the broadcasting material jet and from there to the circumference of the centrifugal disk, the shorter throwing blade (11) being so connected to the longer throwing blade (10), that at least over the entire radial extension of the broadcasting material jet they form a common, closed top surface (14, 17).

2. Spreader according to claim 1, characterized in that the shorter throwing blade (11) extends over approximately the outer half of the radial extension of the broadcasting material jet.

3. Spreader according to claims 1 or 2, characterized in that the longer throwing blade (10) is set back by the amount x with respect to the rotation direction.

4. Spreader according to one of the claims 1 to 3, characterized in that the shorter throwing blade (11) is set back by the amount y with respect to the rotation direction.

5. Spreader according to one of the claims 1 to 4, characterized in that y ≧ x.

6. Spreader according to one of the claims 1 to 5, characterized in that at least the longer throwing blade (10) projects with its outer end over the circumference of the centrifugal disk (6).

7. Spreader according to one of the claims 1 to 6, characterized in that the outer ends of both throwing blades (10, 11) project over the circumference of the centrifugal disk (6), the projecting length of the longer throwing blade (10) exceeding that of the shorter blade.

8. Spreader according to one of the claims 1 to 7, characterized in that at least the longer throwing blade (10) on its outer end is bevelled (38) from the top to the outside over at least part of its height.

9. Spreader according to one of the claims 1 to 8, characterized in that the outer end of the shorter throwing blade (11) is also bevelled (39) from the top to the outside over at least part of its height.

10. Spreader according to one of the claims 1 to 9, in which at least one throwing blade is formed from a U-profile opening in the rotation direction, characterized in that also the shorter throwing blade (11) is formed from a U-profile and that the upper leg (17) of the shorter throwing blade (11) is connected to the upper leg (14) of the longer throwing blade over at least the entire radial extension of the broadcasting material jet.

11. Spreader according to one of the claims 1 to 10, characterized in that the upper legs (14, 17) of the longer and shorter throwing blade (10, 11) are constructed in one piece at least over the entire radial extension of the broadcasting material jet.

12. Spreader according to one of the claims 1 to 11, characterized in that the upper leg (14) of the longer throwing blade (10) passes with its leading edge (21) from the inner end of said throwing blade into a curve in the leading edge (22) on the upper leg (17) of the shorter throwing blade (11).

13. Spreader according to one of the claims 1 to 12, characterized in that the inner end of the longer throwing blade (10) extends beyond the centre of the centrifugal disk (6) to its other side.

14. Spreader according to one of the claims 1 to 13, characterized in that the web (15) of the U-profile of the shorter throwing blade (11) is bent forwards in the rotation direction at its inner end (19).

15. Spreader according to one of the claims 1 to 14, characterized in that the forwardly bent, inner end (19) of the web (15) of the shorter throwing blade (11) is curved concentrically to the axis (7) of the centrifugal disk (6).

16. Spreader according to one of the claims 1 to 15, characterized in that the inner end (19) of the web (15) is drawn forwards at least up to the leading edge (22) of the upper leg (17) of the shorter throwing blade (11).

17. Spreader according to one of the claims 1 to 16, characterized in that the inner end (19) of the web (15) is drawn forwards over and beyond the leading edge (22) of the upper leg (15) of the shorter throwing blade (11) and in this area (20) has a height decreasing into the plane of the centrifugal disk (6).

18. Spreader according to one of the claims 1 to 17, characterized in that in its centre the centrifugal disk has a cap (27), which is higher than the U-profile of the longer throwing blade (10) and that its web (12) engages with its inner end (29) on the cap (27).

19. Spreader according to one of the claims 1 to 18, characterized in that the upper leg (14) of the longer throwing blade (10) is extended beyond the inner end (29) of its web (15) and its rear edge engages on the cap (27), while its leading edge is attached to the cap (27) and with increasing radial spacing from the axis (7) of the centrifugal disk (6) gradually passes into the leading edge (22) of the upper leg (17) of the shorter throwing blade (11).

20. Spreader according to one of the claims 1 to 18, characterized in that the leading edge of the upper leg (14) of the longer throwing blade (10) passes from the attachment point (30) to the cap (27) via a spiral curve (31) and an opposite curve (32) connected thereto into the leading edge (22) of the upper leg (17) of the shorter throwing blade (11).

21. Spreader according to one of the claims 1 to 20, in which the centrifugal disk is mounted on a hub of the driving shaft positioned below it, characterized in that the centrifugal disk (6) is fixed to the hub (33) by means of the cap (27).

22. Spreader according to one of the claims 1 to 21, in which the outlet is located on the bottom of the storage vessel, characterized in that at least the leading edge (22) of the longer and the shorter throwing blade (10,11), at least in the vicinity of the radial extension of the outlet (4) is positioned slightly lower than the lower edge of the outlet.

23. Spreader according to one of the claims 1 to 22, characterized in that the upper leg (14) of the longer and the shorter throwing blade (10,11), at least in the vicinity of the radial extension of the outlet (4), is inclined slightly rearward and downwards from the leading edge (22).

24. Spreader according to one of the claims 1 to 23, in which the outlet is formed by an outlet shaft extending downwards from an opening in the bottom of the storage vessel, characterized in that the upper leg (17) of at least the shorter throwing blade (11) in its portion (26) passing outwards from the radially outermost boundary of the outlet shaft (4) is positioned higher than the lower edge of the outlet shaft (4).

25. Spreader according to one of the claims 1 to 24, characterized in that the inner edge (25) of the web (15, 24) of the shorter throwing blade (11) is located at the transition to the higher portion (26) of the upper leg on a radius which is little greater than the radius on which is located the radially furthest outward point of the outlet shaft (4).

26. Spreader according to one of the claims 1 to 25, characterized in that the higher portion (26) of the upper leg of the shorter throwing blade (11) is positioned parallel to the bottom of the storage vessel (2) and slightly below the same.

27. Spreader according to one of the claims 1 to 26, characterized in that the cap (27) projects upwards over the lower edge of the outlet shaft (4) adjacent thereto.

28. Spreader according to one of the claims 1 to 27, characterized in that the outlet shaft (4), at least along its boundary facing the inlet side of the throwing blades (10, 11) in the fertilizer jet is provided with flexible material strips (40) giving way in the rotation direction of the throwing blades and which project into the movement path of said blades (10,11).

29. Spreader according to one of the claims 1 to 28, characterized in that the flexible material strips (40) are located on those boundaries of the outlet shaft (4) on which they do not give way into the fertilizer jet when the throwing blades (10,11) pass through the latter.

30. Spreader according to one of the claims 1 to 29, characterized in that the flexible material strips (40) are formed by plastic bristles.

31. Spreader according to one of the claims 1 to 30, characterized in that on each centrifugal disk are provided at least two pairs of throwing blades (10,11), which are set at different angles with respect to the rotation direction.

32. Spreader according to one of the claims 1 to 31, characterized in that the outlet shaft (4) has a cross-section increasing from the outlet (3) to its lower edge.

33. Spreader according to one of the claims 1 to 32, characterized in that in the case of a change of the cross-section of the outlet (3) the centroid of the free cross-section migrates outwards with increasing broadcasting material quantity.

34. Spreader according to one of the claims 1 to 33, characterized in that the centroid migrates outwards counter to the rotation direction with increasing broadcasting material quantity.

35. Spreader according to one of the claims 1 to 34, in which for at least two different working widths and/or broadcasting material quantities is provided in each case one centrifugal disk or a pair of centrifugal disks with a different construction and/or arrangement of the throwing blades in interchangeable manner, characterized in that in the case of the centrifugal disk (6) for the smaller working width and/or smaller broadcasting quantity, the inner end (19) of the leading throwing blade is positioned radially further inwards than at the centrifugal disk for the larger working width and/or broadcasting quantity.

36. Spreader according to one of the claims 1 to 34, in which for at least two different working widths and/or broadcasting quantities there are two different throwing blades arranged in interchangeable manner on the centrifugal disk, characterized in that at least the in each case leading throwing blade (11) is interchangeable, so that the inner end (19) of the leading throwing blade (11) for the small working width and/or broadcasting quantity is located radially further inwards than that of the leading throwing blade for the large working widths and/or broadcasting quantities.

37. Spreader according to one of the claims 1 to 34, characterized in that at least the leading throwing blade (11) is adjustably arranged on the centrifugal disk (6) in such a way that it migrates outwards for large working widths and/or large broadcasting quantities on the centrifugal disk (6).

38. Spreader according to one of the claims 1 to 34, characterized in that in the case of a centrifugal disk (6) with two pairs of throwing blades (10,11) the inner end (19) of the leading throwing blade (11) of one pair is located on a different radius than that of the other pair.

39. Spreader according to one of the claims 1 to 38, characterized in that in the case of an adjustable outlet (3) with a free cross-section, whose centroid migrates as a function of the setting (quantity) relative to the centrifugal disk (6), the inner end (19) of the leading throwing blade (11) is located on roughly the same radius as the centroid.

## Revendications

1. Epandeur centrifuge, comprenant un réservoir de stockage (1) contenant des matières coulantes à répandre, en particulier de l'engrais, avec au moins une ouverture de sortie (3) réglable à partir de laquelle la matière à répandre sort à la manière d'un jet à tirage par en bas, et un disque d'épandage (6) disposé sous ladite ouverture de sortie et tournant autour d'un axe (7) décalé par rapport à cette dernière, avec au moins une ailette d'éjection (8) qui s'étend sur la totalité de l'extension radiale du jet de matière à répandre, en direction de la périphérie du disque d'épandage, **caractérisé en ce** que, dans le direction circonférentielle du disque d'épandage (6), au moins une ailette d'éjection supplémentaire plus courte (11) est disposée directement devant chaque ailette d'éjection (10), laquelle ne s'étend que sur une partie de l'extension radiale du jet de matière à répandre et de là en direction de la périphérie du disque d'épandage, l'ailette d'éjection plus courte (11) étant reliée à l'ailette d'éjection plus longue (10) de telle façon qu'elles présentent, au moins sur l'extension radiale du jet de matière à répandre, une face supérieure (14, 17) continue commune.

2. Epandeur centrifuge selon la revendication 1, caractérisé en ce que l'ailette d'éjection plus courte (11) s'étend sensiblement sur la moitié extérieure de l'extension radiale du jet de matière à répandre.

3. Epandeur centrifuge selon l'une des revendications 1 ou 2, caractérisé en ce que l'ailette d'éjection plus longue (10) est décalée en arrière de la cote x par rapport à la direction circonférentielle.

4. Epandeur centrifuge selon l'une des revendications 1 à 3, caractérisé en ce que l'ailette d'éjection plus courte (11) est décalée en arrière de la cote y par rapport à la direction circonférentielle.

5. Epandeur centrifuge selon l'une des revendications 1 à 4, caractérisé en ce y ≧ x.

6. Epandeur centrifuge selon l'une des revendications 1 à 5, caractérisé en ce qu'au moins l'ailette d'éjection plus longue (10) dépasse avec son extrémité extérieure de la périphérie du disque d'épandage (6).

7. Epandeur centrifuge selon l'une des revendications 1 à 6, caractérisé en ce que les deux ailettes d'éjection (10, 11) dépassent avec leurs extrémités extérieures de la périphérie du disque d'épandage (6), le dépassement de l'ailette d'éjection plus longue (10) étant plus grand que celui de l'ailette d'éjection plus courte.

8. Epandeur centrifuge selon l'une des revendications 1 à 7, caractérisé en ce qu'au moins l'extrémité extérieure de l'ailette d'éjection plus longue (10) est chanfreinée (38) au moins sur une partie de sa hauteur du haut vers l'extérieur.

9. Epandeur centrifuge selon l'une des revendications 1 à 8, caractérisé en ce que l'extrémité extérieure de l'ailette d'éjection plus courte (11) est, elle aussi, chanfreinée (39) au moins sur une partie de sa hauteur du haut vers l'extérieur.

10. Epandeur centrifuge selon l'une des revendications 1 à 9, dont au moins l'une des ailettes d'éjection est réalisée à partir d'une profilé en U s'ouvrant dans la direction périphérique, caractérisé en ce que l'ailette d'éjection plus courte (11) est, elle aussi, réalisée à partir d'un profilé en U, et que la branche supérieure (17) de l'ailette d'éjection plus courte (11) se raccorde au moins sur la totalité de l'extension radiale du jet de matière à répandre, à la branche supérieure (14) de l'ailette d'éjection plus longue.

11. Epandeur centrifuge selon l'une des revendications 1 à 10, caractérisé en ce que les branches supérieures (14, 17) des ailettes d'éjection plus longue et plus courte (10, 11) sont réalisées d'un seul tenant au moins sur toute l'extension radiale du jet de matière à répandre.

12. Epandeur centrifuge selon l'une des revendications 1 à 11, caractérisé en ce que le bord antérieur (21) de la branche supérieure (14) de l'ailette d'éjection plus longue (10), en partant de l'extrémité intérieure de ladite ailette d'éjection, se raccorde en une courbure au bord antérieur (22) sur la branche supérieure (17) de l'ailette d'éjection plus courte (11).

13. Epandeur centrifuge selon l'une des revendications 1 à 12, caractérisé en ce que l'ailette à d'éjection plus longue (10) s'étend avec son extrémité intérieure au-delà du centre du disque d'épandage (6), sur l'autre côté de celui-ci.

14. Epandeur centrifuge selon l'une des revendications 1 à 13, caractérisé en ce que le dos (15) du profilé en U de l'ailette d'éjection plus courte (11) est courbé à son extrémité intérieure (19) vers l'avant dans le sens de rotation.

15. Epandeur centrifuge selon l'une des revendications 1 à 14, caractérisé en ce que l'extrémité intérieure (19) courbée vers l'avant du dos (15) de l'ailette d'éjection plus courte (11) est courbée concentriquement par rapport à l'axe (7) du disque d'épandage (6).

16. Epandeur centrifuge selon l'une des revendications 1 à 15, caractérisé en ce que l'extrémité intérieure (19) du dos (15) est amenée au moins jusqu'au bord antérieur (22) de la branche supérieure (17) de l'ailette d'éjection plus courte (11).

17. Epandeur centrifuge selon l'une des revendications 1 à 16, caractérisé en ce que le dos (15) est amené avec son extrémité intérieure (19) vers l'avant, au-delà du bord antérieur (22) de la branche supérieure (15) de l'ailette d'éjection plus courte (11) et présente dans cette région (20) une hauteur qui diminue jusque dans le plan du disque d'épandage (6).

18. Epandeur centrifuge selon l'une des revendications 1 à 17, caractérisé en ce que le disque d'épandage comporte au centre un capuchon (27) d'une hauteur plus grande que celle du profilé en U de l'ailette d'éjection plus longue (10), et que l'extrémité intérieure (29) du dos (12) de celle-ci est appliqué contre ledit capuchon (27).

19. Epandeur centrifuge selon l'une des revendications 1 à 18, caractérisé en ce que la branche supérieure (14) de l'ailette d'éjection plus longue (10) est prolongée au-delà de l'extrémité intérieure (29) du dos (15) de ladite ailette d'éjection et appliquée avec son bord postérieur contre le capuchon (27), tandis que son bord antérieur est rattaché audit capuchon (27) et se raccorde progressivement, au fur et à mesure que la distance radiale par rapport à l'axe (7) du disque d'épandage (6) augmente, au bord antérieur (22) de la branche supérieure (17) de l'ailette d'éjection plus courte (11).

20. Epandeur centrifuge selon l'une des revendications 1 à 18, caractérisé en ce que le bord antérieur de la branche supérieure (14) de l'ailette d'éjection plus longue (10), en partant de la jonction (30) avec le capuchon (27) se raccorde par l'intermédiaire d'une courbure hélicoïdale (31) suivie d'une courbure (32) en sens opposé, au bord antérieur (22) de la branche supérieure (17) de l'ailette d'éjection plus courte (11).

21. Epandeur centrifuge selon l'une des revendications 1 à 20, le disque d'épandage étant fixé sur un moyeu de l'arbre moteur disposé au-dessous dudit moyeu, caractérisé en ce que le disque d'épandage (6) est fixé sur le moyeu (33) au moyen du capuchon (27).

22. Epandeur centrifuge selon l'une des revendications 1 à 21, la sortie étant prévue au fond du réservoir de stockage, caractérisé en ce qu'au moins le bord antérieur (22) des ailettes d'éjection plus longue et plus courte (10, 11) se situe, au moins dans la région de l'extension radiale de la sortie (4), à un niveau légèrement plus bas que le bord inférieur de ladite sortie.

23. Epandeur centrifuge selon l'une des revendications 1 à 22, caractérisé en ce que la branche supérieure (14) des ailettes d'éjection plus longue et plus courte (10, 11) est légèrement inclinée du bord antérieur (22) vers l'arrière et vers le bas, au moins dans la région de l'extension radiale de la sortie (4).

24. Epandeur centrifuge selon l'une des revendications 1 à 23, dans lequel la sortie est constituée par un tuyau de déversement qui prolonge vers le bas une ouverture ménagée dans le fond du réservoir de stockage, caractérisé en ce que la branche supérieure (17) d'au moins l'ailette d'éjection plus courte (11) se situe, dans sa section (26) qui fait suite vers l'extérieur à la périphérie radialement la plus à l'extérieur du tuyau de déversement (4), à un niveau plus élevé que le bord inférieur dudit tuyau de déversement (4).

25. Epandeur centrifuge selon l'une des revendications 1 à 24, caractérisé en ce que le bord intérieur (25) du dos (15, 24) de l'ailette d'éjection plus courte (11) se situe à la transition avec la section (26) plus haute de la branche supérieure, sur un rayon qui est légèrement plus grand que le rayon sur lequel se situe le point du tuyau de déversement (4) placé radialement le plus à l'extérieur.

26. Epandeur centrifuge selon l'une des revendications 1 à 25, caractérisé en ce que la section (26) plus élévée de la branche supérieure de l'ailette d'éjection plus courte (11) se situe parallèlement au fond (2) du réservoir de stockage (1) et légèrement en dessous de celui-ci.

27. Epandeur centrifuge selon l'une des revendications 1 à 26, caractérisé en ce que le capuchon (27) dépasse vers le haut du bord supérieur du tuyau de déversement (4).

28. Epandeur centrifuge selon l'une des revendications 1 à 27, caractérisé en ce que le tuyau de déversement (4) comporte au moins le long de sa périphérie opposée au côté de l'entrée des ailettes d'éjection (10, 11) dans le jet d'engrais, des bandes de matériau flexibles (40) qui s'écartent dans le sens de rotation des ailettes d'éjection et qui dépassent dans la trajectoire desdites ailettes d'éjection (10, 11).

29. Epandeur centrifuge selon l'une des revendications 1 à 28, caractérisé en ce que les bandes de matériau flexibles (40) sont disposées aux points périphériques du tuyau de déversement (4) auxquels elles ne s'écartent pas dans le jet d'engrais lors du passage des ailettes d'éjection (10, 11) dans ledit jet d'engrais.

30. Epandeur centrifuge selon l'une des revendications 1 à 29, caractérisé en ce que les bandes de matériau flexibles (40) sont constituées par des poils en matière plastique.

31. Epandeur centrifuge selon l'une des revendications 1 à 30, caractérisé en ce que sur chaque disque d'épandage sont montées au moins deux paires d'ailettes d'éjection (10, 11) qui présentent des inclinaisons différentes par rapport à la direction de rotation.

32. Epandeur centrifuge selon l'une des revendications 1 à 31, caractérisé en ce que le tuyau de déversement (4) présente une section transversale qui augmente de l'ouverture de sortie (3) en direction de son bord inférieur.

33. Epandeur centrifuge selon l'une des revendications 1 à 32, caractérisé en ce que, en modifiant la section transversale de l'ouverture de sortie (3), le centre de gravité superficiel de la section transversale libre se déplace vers l'extérieur au fur et à mesure que la quantité d'épandage augmente.

34. Epandeur centrifuge selon l'une des revendications 1 à 33, caractérisé en ce que le centre de gravité superficiel se déplace vers l'extérieur, dans le sens opposé à la direction de rotation, au fur et à mesure que la quantité d'épandage augmente.

35. Epandeur centrifuge selon l'une des revendications 1 à 34, comprenant pour au moins deux largeurs de travail et/ou quantités d'épandage différentes, respectivement un disque d'épandage ou une paire de disques d'épandage interchangeables avec une conformation et/ou une disposition variables des ailettes d'éjection, caractérisé en ce que, pour le disque d'épandage (6) pour la largeur de travail plus faible et/ou pour la quantité d'épandage plus faible, l'extrémité intérieure (19) de l'ailette d'éjection antérieure est placée radialement plus à l'intérieur que pour le disque d'épandage pour la largeur de travail et/ou la quantité d'épandage plus grandes.

36. Epandeur centrifuge selon l'une des revendications 1 à 34, dans lequel deux ailettes d'éjection différentes sont montées de manière interchangeable sur le disque d'épandage pour au moins deux largeurs de travail et/ou quantités d'épandage différentes, caractérisé en ce qu'au moins l'ailette d'éjection antérieure (11) est interchangeable, de telle façon que l'extrémité intérieure (19) de l'ailette d'éjection antérieure (11) pour la faible largeur de travail et/ou quantité d'épandage se situe radialement plus à l'intérieur que celle de l'ailette d'éjection antérieure pour les grandes largeurs de travail et/ou quantités d'épandage.

37. Epandeur centrifuge selon l'une des revendications 1 à 34, caractérisé en ce qu'au moins l'ailette d'éjection antérieure (11) est montée de manière réglable sur le disque d'épandage (6), de façon que pour des grandes largeurs de travail et/ou des grandes quantités d'épandage, elle se déplace sur le disque d'épandage (6) vers l'extérieur.

38. Epandeur centrifuge selon l'une des revendications 1 à 4, caractérisé en ce que pour un disque d'épandage (6) avec deux paires d'ailettes d'éjection (10, 11), l'extrémité intérieure (19) de l'ailette d'éjection antérieure (11) de l'une des paires se situe sur un rayon autre que pour l'autre paire.

39. Epandeur centrifuge selon l'une des revendications 1 à 38, caractérisé en ce que, avec une ouverture de sortie (3) avec une section transversale libre dont le centre de gravité superficiel migre par rapport au disque d'épandage (6) en fonction du réglage (quantité), l'extrémité intérieure (19) de l'ailette d'éjection antérieure (11) se situe sensiblement sur le même rayon que le centre de gravité superficiel.
